# EUROPÄISCHE PATENTSCHRIFT

(11) **EP 1 359 058 B1**
(45) Veröffentlichungstag und Bekanntmachung des Hinweises auf die Patenterteilung: **29.03.2006**
(21) Anmeldenummer: 03009481.7
(22) Anmeldetag: 26.04.2003
(51) Int. Cl.: B60R 21/01

(54) **Steuerungseinrichtung für ein Kraftfahrzeug**
Control unit for a motor vehicle
Dispositif de commande pour un véhicule automobile

(30) Priorität: 02.05.2002 DE 10219536
(43) Veröffentlichungstag der Anmeldung: 05.11.2003
(73) Patentinhaber: ADAM OPEL AG, 65423 Rüsselsheim (DE)
(72) Erfinder: Schumacher, Wolfgang, 65428 Rüsselsheim (DE); Schieck, Rudi, 55232 Alzey (DE)
(74) Vertreter: Daniel, Ulrich W.P.

(56) Entgegenhaltungen:
- EP-A- 0 398 307
- DE-A- 19 527 565
- DE-A- 19 702 270
- DE-A- 19 813 923
- DE-C- 19 909 535

## Beschreibung

Die Erfindung bezieht sich auf eine Steuerungseinrichtung für ein Kraftfahrzeug mit einem Steuergerät, das über einen Datenbus mit elektronischen Steuermodulen für Stellelemente gekoppelt ist.

Kraftfahrzeuge mit einer Zentralverriegelung werden in zunehmendem Maß mit verriegelten Türen benutzt, um ein Eindringen von außen während eines Halts oder einer langsamen Fahrt zu verhindern. Dies ist jedoch insofern nachteilig, als nach einem Unfall die Fahrzeuginsassen eingeschlossen sind und aufgrund ihres körperlichen Zustandes unter Umständen nicht in der Lage sind, die Türen selbst zu entriegeln. Ein Öffnen der verriegelten Türen von außen ist lediglich unter Gewaltanwendung mit gegeeignetem Werkzeug möglich, weshalb eine rasche Hilfe für die Fahrzeuginsassen oftmals nicht gegeben ist.

Aus der DE 195 27 565 Al ist eine Einrichtung zum Entriegeln von Türen eines Kraftfahrzeuges mit elektrischen Stellelementen bekannt, die eine Steuerschaltung umfasst. Die Steuerschaltung erhält bei einem Unfall ein Auslösesignal und die elektrischen Stellelemente sind sowohl von der Fahrzeugbatterie als auch von einer weiteren Batterie betreibbar.

Des Weiteren offenbart die EP 0 398 307 B1 ein automatisches System zum Schutz und zur Hilfe für die Insassen eines in einen Unfall verwickelten Kraftfahrzeuges, das eine Aufprallsensoreinrichtung, die durch von einem Aufprall hervorgerufenen Trägheitskräften betätigt wird und einen Batteriekreis des Kraftfahrzeuges unterbricht, und eine Einrichtung zum Lösen der Sicherheitsgurte aus ihren Befestigungen im Anschluss an den Aufprall enthält. Es ist eine zentrale Befehlseinheit vorgesehen, mit der die Sicherheitsgurtlöseeinrichtung, ein Elektroventil zur Unterbrechung einer Kraftstoffzufuhr von einem Tank, ein Zentralverriegelungssystem und ein elektrisches Fensterhebersystem verbunden sind. Die Befehlseinheit ist dazu eingerichtet das Elektroventil zur Unterbrechung der Kraftstoffzufuhr bei einem Aufprall anzusteuern und die Sicherheitsgurtlöseeinrichtung, die Türverriegelungs- sowie die Fensterhebersysteme so zu steuern, dass diese automatisch und verzögert nacheinander die Sicherheitsgurte lösen, die Türen entriegeln und die Fenster öffnen, nachdem von der Aufprallsensoreinrichtung ein Aufprall ermittelt wurde.

Die DE-A-19 702 270 zeigt die Merkmale des Oberbegriffs des unabhängigen Anspruchs 1.

Darüber hinaus ist es aus der Praxis bekannt, ein unfallbedingtes Entriegelungssignal für eine Zentralverriegelung eines Kraftfahrzeuges von einem Airbag-Steuergerät über einen Datenbus an das der Zentralverriegelung zugeordnete Steuergerät zu senden, das das Signal auswertet und ein Öffnen der Türen über Stellelemente der Zentralverriegelung bewirkt. Dies setzt jedoch voraus, dass der Datenbus nach einem Unfall funktionsfähig und eine Kommunikation zwischen dem Airbag-Steuergerät und dem Steuergerät für die Zentralverriegelung gewährleistet ist.

Es ist Aufgabe der Erfindung, eine Steuerungseinrichtung für ein Kraftfahrzeug der eingangs genannten Art zu schaffen, die auch bei einem unfallbedingten Ausfall des Datenbusses für die Fahrzeuginsassen sicherheitsrelevante Funktionen gewährleistet.

Erfindungsgemäß wird die Aufgabe dadurch gelöst, dass das Steuergerät permanent oder in Intervallen ein Signal auf den Datenbus sendet und bei einem Ausbleiben des Signals über einen definierten Zeitraum die für Fahrzeuginsassen nach einem Unfall relevanten Stellelemente über die zugeordneten das Signal auswertenden Steuermodule für einen Insassenschutz angesteuert werden.

Aufgrund dieser Maßnahmen sind auch die durch die Signalgebung des Steuergerätes veranlassten, für die Fahrzeuginsassen sicherheitsrelevanten Funktionen sichergestellt, da das Ausbleiben des Signals beispielsweise wegen eines unfallbedingten Ausfalls des Datenbusses, eine entsprechende Ansteuerung sicherheitsrelevanter Steuermodule zur Folge hat und somit eine Beaufschlagung der Stellelemente gewährleistet ist. Damit wird eine Steuerung nach Art einer so genannten Totmannschaltung zur Verfügung gestellt.

Um eine relativ geringe Auslastung des Datenbusses, der beispielsweise als Can-Bus realisiert ist, zu bewirken, sendet bevorzugt das Steuergerät das Signal periodisch auf den Datenbus.

Vorzugsweise ist das Steuergerät als Airbag-Steuergerät ausgebildet, das das Signal in Abhängigkeit von Informationen eines zugeordneten Beschleunigungssensors auf den Datenbus sendet. Das Airbag-Steuergerät erhält Informationen von einem fahrzeugseitigen Beschleunigungssensor, die zuverlässig auf einen Unfall schließen lassen.

Zweckmäßigerweise steuern die Steuermodule die Stellelemente zeitverzögert zum Ausbleiben des Signals an. Somit bleiben sämtliche Funktionen nach dem Ausbleiben des Signals für eine vorgegebene Zeitspanne erhalten, um die Fahrzeuginsassen nicht zu gefährden.

Nach einer vorteilhaften Weiterbildung des Erfindungsgedankens entriegelt ein Steuermodul einer Zentralverriegelung beim Ausbleiben des Signals mittels zugeordneter Stellelemente sämtliche Fahrzeugtüren. Das das Signal auswertende Steuermodul der Zentralverriegelung stellt über die zugeordneten Stellelemente schnelle rettende Maßnahmen sicher, da Helfer nach einem Unfall, auch bei einem defekten Datenbus, ein entriegeltes Kraftfahrzeug vorfinden und ohne weitere Maßnahmen direkten Zugang zu den Fahrzeuginsassen haben.

Zur Einleitung einer weiteren Sicherheitsmaßnahme für die Fahrzeuginsassen nach einem unfallbedingten Ausfall des Datenbusses beaufschlagt bevorzugt eines der Steuermodule beim Ausbleiben des Signals ein Elektroventil zum Unterbrechen einer Kraftstoffzufuhr von einem Tank zu einem Motor. Somit ist eine Brand- und Explosionsgefahr wesentlich reduziert.

Um ein relativ schnelles Bergen verunfallter Fahrzeuginsassen auch nach einer Beschädigung des Datenbusses zu ermöglichen, steuert vorteilhafterweise eines der Steuermodule beim Ausbleiben des Signals Stellelemente zum Lösen von Sicherheitsgurten an. Zweckmäßigerweise beaufschlagt eines der Steuermodule beim Ausbleiben des Signals die Stellelemente einer Fensterhebereinrichtung zum Öffnen der Fenster.

Um die Sicherheit der Fahrzeuginsassen weitergehend zu erhöhen, ist vorzugsweise eine redundante Energieversorgung für die Stellelemente sowie die zugeordneten Steuermodule vorgesehen. Beispielsweise kann eine zweite Fahrzeugbatterie die Stellelemente sowie die Steuermodule beim Ausfall einer primären Fahrzeugbatterie mit Energie versorgen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

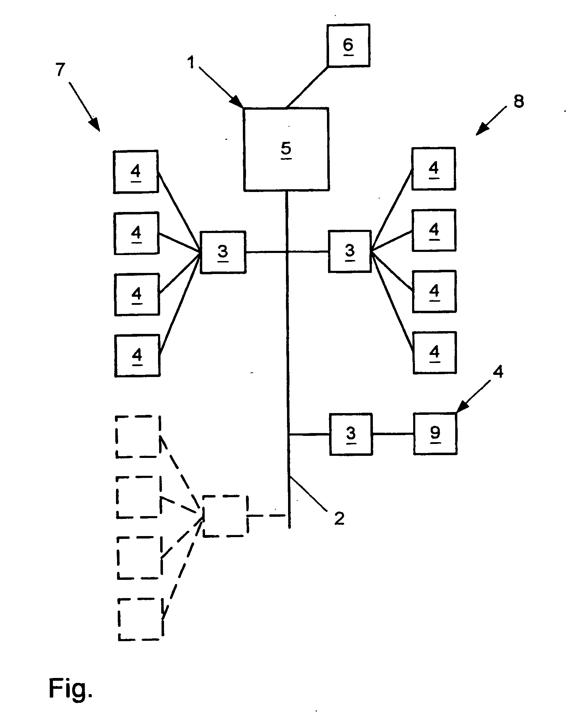

Die Erfindung wird im Folgenden anhand eines Ausführungsbeispieles unter Bezugnahme auf die zugehörige Zeichnung näher erläutert. Die einzige Fig. zeigt eine schematische Darstellung einer erfindungsgemäßen Steuerungseinrichtung.

Die Steuerungseinrichtung für ein Kraftfahrzeug umfasst ein Steuergerät 1, das über einen Datenbus 2 mit elektronischen Steuermodulen 3 für Stellelemente 4 gekoppelt ist. Das Steuergerät 1 ist als Airbag-Steuergerät 5 ausgebildet und steht mit einem Beschleunigungssensor 6 in Verbindung. Über den als Can-Bus ausgeführten Datenbus 2 ist das Steuergerät 1 mit den Steuermodulen 3 verbunden.

Das Steuergerät 1 sendet ein periodisches Signal auf den Datenbus 2, das von den Steuermodulen 3 empfangen und ausgewertet wird. Der Empfang dieses Signals bedeutet, dass der-Datenbus 2 funktionsfähig ist. Bei einem Ausbleiben des Signals über einen definierten Zeitraum steuern die für nach einem Unfall relevanten Stellelementen 4 zugeordneten Steuermodule 3 die Stellelemente 4 derart an, dass ein Insassenschutz auch bei einem Ausfall des Datenbusses 2 gewährleistet ist. Das Steuermodul 3 einer Zentralverriegelung 7 bewirkt beim Ausbleiben des Signals über die ihm zugeordneten Stellelemente 4 die Entriegelung sämtlicher Fahrzeugtüren. Eines der Steuermodule 3 beaufschlagt beim Ausbleiben des Signals die Stellelemente 4 einer Fensterhebereinrichtung 8 zum Öffnen der Fenster und ein weiteres der Steuermodule 3 betätigt ein Elektroventil 9 zum Unterbrechen einer Kraftstoffzufuhr von einem Tank zu einem Motor.

### Bezugszeichenliste

- 1.: Steuergerät
- 2.: Datenbus
- 3.: Steuermodul
- 4.: Stellelement
- 5.: Airbag-Steuergerät
- 6.: Beschleunigungssensor
- 7.: Zentralverriegelung
- 8.: Fensterhebereinrichtung
- 9.: Elektroventil

## Patentansprüche

1. Steuerungseinrichtung für ein Kraftfahrzeug mit einem Steuergerät (1), das über einen Datenbus (2) mit elektronischen Steuermodulen (3) für Stellelemente (4) gekoppelt ist, **dadurch gekennzeichnet, dass** das Steuergerät (1) permanent oder in Intervallen ein Signal auf den Datenbus (2) sendet und bei einem Ausbleiben des Signals über einen definierten Zeitraum die für Fahrzeuginsassen nach einem Unfall relevanten Stellelemente (4) über die zugeordneten das Signal auswertenden Steuermodule (3) für einen Insassenschutz angesteuert werden.

2. Steuerungseinrichtung nach Anspruch 1, **dadurch gekennzeichnet, dass** das Steuergerät (1) das Signal periodisch auf den Datenbus (2) sendet.

3. Steuerungseinrichtung nach Anspruch 1 oder 2, **dadurch gekennzeichnet, dass** das Steuergerät (1) als Airbag-Steuergerät (5) ausgebildet ist, das das Signal in Abhängigkeit von Informationen eines zugeordneten Beschleunigungssensors (6) auf den Datenbus (2) sendet.

4. Steuerungseinrichtung nach Anspruch 1, **dadurch gekennzeichnet, dass** die Steuermodule (3) die Stellelemente (4) zeitverzögert zum Ausbleiben des Signals ansteuern.

5. Steuerungseinrichtung nach einem der Ansprüche 1 bis 4, **dadurch gekennzeichnet, dass** ein Steuermodul (3) einer Zentralverriegelung (7) beim Ausbleiben des Signals mittels zugeordneter Stellelemente (4) sämtliche Fahrzeugtüren entriegelt.

6. Steuerungseinrichtung nach einem der Ansprüche 1 bis 5, **dadurch gekennzeichnet, dass** eines der Steuermodule (3) beim Ausbleiben des Signals ein Elektroventil (9) zum Unterbrechen einer Kraftstoffzufuhr von einem Tank zu einem Motor beaufschlagt.

7. Steuerungseinrichtung nach einem der Ansprüche 1 bis 6, **dadurch gekennzeichnet, dass** eines der Steuermodule (3) beim Ausbleiben des Signals Stellelemente zum Lösen von Sicherheitsgurten ansteuert.

8. Steuerungseinrichtung nach einem der Ansprüche 1 bis 7, **dadurch gekennzeichnet, dass** eines der Steuermodule (2) beim Ausbleiben des Signals die Stellelemente (42) einer Fensterhebereinrichtung (8) zum Öffnen der Fenster beaufschlagt.

9. Steuerungseinrichtung nach einem der Ansprüche 1 bis 8, **dadurch gekennzeichnet, dass** eine redundante Energieversorgung für die Stellelemente (4) sowie die zugeordneten Steuermodule (3) vorgesehen ist.

## Claims

1. A control unit for a motor vehicle comprising a control device (1) which is coupled via a data bus (2) to electronic control modules (3) for the actuating elements (4), **characterized in that** the control device (1) transmits a signal on the data bus (2) permanently or at intervals and, in the event that the signal fails to appear for a defined period of time, the actuating elements (4) relevant to the vehicle occupants after an accident are operated for the protection of the occupants by the associated control modules (3) which evaluate the signal.

2. A control unit in accordance with Claim 1, **characterized in that** the control device (1) transmits the signal periodically on the data bus (2).

3. A control unit in accordance with Claim 1 or 2, **characterized in that** the control device (1) is in the form of an airbag control device (5) which transmits the signal over the data bus (2) in dependence on items of information from an associated acceleration sensor (6).

4. A control unit in accordance with Claim 1, **characterized in that** the control modules (3) delay the operation of the actuating elements (4) following the failure of the signal to appear.

5. A control unit in accordance with any of the Claims 1 to 4, **characterized in that** a control module (3) of a central locking system (7) unlocks all the doors of the vehicle by means of the associated actuating elements (4) when the signal fails to appear.

6. A control unit in accordance with any of the Claims 1 to 5, **characterized in that** one of the control modules (3) operates an electrical valve (9) for interrupting a fuel supply from a tank to an engine when the signal fails to appear.

7. A control unit in accordance with any of the Claims 1 to 6, **characterized in that** one of the control modules (3) operates actuating elements for releasing the seat belts when the signal fails to appear.

8. A control unit in accordance with any of the Claims 1 to 7, **characterized in that** one of the control modules (2) [sic] operates the actuating elements (42) [sic] of a window winder mechanism (8) for opening the windows when the signal fails to appear.

9. A control unit in accordance with any of the Claims 1 to 8, **characterized in that** a redundant power supply is provided for the actuating elements (4) and the associated control modules (3).

## Revendications

1. Dispositif de commande pour un véhicule automobile, avec un appareil de commande (1) couplé, par l'intermédiaire d'un bus de données (2) à des modules de commande (3) électroniques pour des éléments de réglage (4), **caractérisé en ce que** l'appareil de commande (1) émet, en permanence ou par intervalles, un signal sur le bus de données (2) et, en cas d'absence du signal sur un intervalle de temps défini, les éléments de réglage (4) afférents, pour les passagers du véhicule après un accident, sont commandés par l'intermédiaire des modules de commande (3) associés, évaluant le signal, pour assurer une protection des passagers.

2. Dispositif de commande selon la revendication 1, **caractérisé en ce que** l'appareil de commande (1) émet le signal périodiquement sur le bus de données (2).

3. Dispositif de commande selon la revendication 1 ou 2, **caractérisé en ce que** l'appareil de commande (1) est réalisé sous la forme d'appareil de commande de sac gonflable de sécurité (5) émettant le signal sur le bus de données (2), en fonction d'informations d'un capteur d'accélération (6) associé.

4. Dispositif de commande selon la revendication 1, **caractérisé en ce que** les modules de commande (3) commandent les éléments de réglage (4), de façon temporellement retardée par rapport à la suppression du signal.

5. Dispositif de commande selon l'une des revendications 1 à 4, **caractérisé en ce qu'**un module de commande (3) d'un verrouillage central (7), en cas d'absence du signal, déverrouille l'ensemble des portières du véhicule à l'aide d'éléments de réglage (4) associés.

6. Dispositif de commande selon l'une des revendications 1 à 5, **caractérisé en ce que** l'un des modules de commande (3) en cas d'absence du signal sollicite une électrovanne (9) devant interrompre une amenée de carburant, d'un réservoir à un moteur.

7. Dispositif de commande selon l'une des revendications 1 à 6, **caractérisé en ce que** l'un des modules de commande (3), en cas d'absence du signal, commande des éléments de réglage destinés à relâcher des ceintures de sécurité.

8. Dispositif de commande selon l'une des revendications 1 à 7, **caractérisé en ce que** l'un des modules de commande (2) lors de la suppression du signal sollicite les éléments de réglage (42) d'un dispositif lève-vitres (8) pour ouvrir les fenêtres.

9. Dispositif de commande selon l'une des revendications 1 à 8, **caractérisé en ce qu'**une alimentation en énergie redondante est prévue pour les éléments de réglage (4), ainsi que pour les modules de commande (3) associés.
